# EUROPEAN PATENT SPECIFICATION

(11) **EP 3 887 881 B1**
(45) Date of publication and mention of the grant of the patent: **18.06.2025**
(21) Application number: 18941201.8
(22) Date of filing: 30.11.2018
(51) Int. Cl.: G02B 6/38

(54) **FIBER OPTIC CABLE ASSEMBLIES AND METHODS OF FORMING THE SAME**
GLASFASERKABELBAUGRUPPEN UND HERSTELLUNGSVERFAHREN DAFÜR
ENSEMBLES DE CÂBLES À FIBRES OPTIQUES ET LEUR PROCÉDÉ DE FORMATION

(43) Date of publication of application: 06.10.2021
(73) Proprietor: Corning Optical Fiber Cable (Chengdu) Co., Ltd., Chengdu, Sichuan 610042 (CN)
(72) Inventor: CAO, Songhua, Shanghai 200233 (CN); GUO, Hongfeng, Shanghai 200233 (CN); ZHOU, Shunsheng, Shanghai 200233 (CN)
(74) Representative: Reddie & Grose LLP
(86) International application number: PCT/CN2018/118529
(87) International publication number: WO 2020/107395

(56) References cited:
- JP-A- S60 179 708
- US-A- 5 199 095
- US-A- 5 892 871
- US-A1- 2002 164 130
- US-A1- 2011 091 169
- US-A1- 2012 308 183
- US-A1- 2014 205 245
- US-A1- 2014 328 560
- US-A1- 2016 018 605
- US-A1- 2017 235 063

## Description

### PRIORITY APPLICATION

This application is a continuation of International Application No. PCT/CN2018/118529, filed on November 30, 2018.

### BACKGROUND

This disclosure relates generally to optical connectivity, and more particularly to fiber optic cable assemblies that include over-molded strain boots (i.e., strain-relief members).

Optical fibers are useful in a wide variety of applications, including the telecommunications industry for voice, video, and data transmissions. In a telecommunications system that uses optical fibers, there are typically many locations where fiber optic cables that carry the optical fibers connect to equipment or other fiber optic cables. To conveniently provide these connections, fiber optic connectors are often provided on the ends of fiber optic cables. The process of terminating individual optical fibers from a fiber optic cable is referred to as "connectorization." Connectorization can be done in a factory, resulting in a "pre-connectorized" or "pre-terminated" fiber optic cable, or the field (e.g., using a "field-installable" fiber optic connector).

Regardless of where installation occurs, a fiber optic connector typically includes a ferrule with one or more bores that receive one or more optical fibers. The ferrule supports and positions the optical fiber(s) with respect to a housing of the fiber optic connector. Thus, when the housing of the fiber optic connector is mated with another connector (e.g., in an adapter), an optical fiber in the ferrule is positioned in a known, fixed location relative to the housing. This allows an optical connection to be established when the optical fiber is aligned with another optical fiber provided in the mating connector.

The housing or body components of a fiber optic connector are often relatively rigid so that the fiber optic connector can withstand a variety of forces during handling and use without affecting the optical connection that may be or has been established. Having rigid components, however, presents design challenges elsewhere. For example, fiber optic cables upon which fiber optic connectors are installed are typically much less rigid than connector bodies. The rapid transition from high stiffness to low stiffness may result in stress concentrations where the cable meets the connector body. Radial loads applied to the cable may then result in the cable bending (e.g., where the stresses are concentrated) beyond a minimum bend radius that must not be exceeded for the cable to function properly.

To address the above-mentioned challenges, a fiber optic connector typically includes a flexible, strain-relieving boot that snaps onto the connector body and extends rearwardly over a portion of the cable. The boot provides a transition in stiffness between the fiber optic connector and the cable. Although many different boot designs have been proposed to properly provide this transition, new solutions are still desired.

US2017235063 discloses a strain relief boot and a fiber optic cable assembly. The strain relief boot has a first conduit made of at least a first material. The first conduit has a front segment and a rear segment. The rear segment includes at least one discontinuity to make the rear segment more flexible than the front segment. The rear segment also includes at least one projection extending outwardly from the rear segment at a location adjacent to the at least one discontinuity. The strain relief boot also has a second conduit made from at least a second material that is less rigid than the first material. The second conduit at least partially surrounds at least the rear segment of the first conduit and extends rearwardly of the first conduit.

### SUMMARY

The invention is defined in the independent claims to which reference should now be made. Advantageous features are set forth in the dependent claims.

Embodiments of fiber optic assemblies are provided in this disclosure. According to one embodiment, a fiber optic assembly comprises a fiber optic cable having at least one optical fiber, a cable jacket surrounding the at least one optical fiber, and aramid fibers between the cable jacket and the at least one optical fiber. The fiber optic cable assembly also includes a fiber optic connector installed on an end of the fiber optic cable. The fiber optic connector includes a connector body that has a back-end portion. The at least one optical fiber extends through the back-end portion of the connector body. The cable jacket includes a jacket end portion defining an end of the cable jacket that is spaced from the back-end portion of the connector body. At least some of the aramid fibers extend beyond the end of the cable jacket and over the back-end portion of the connector body. The fiber optic connector also includes a tube having a first portion positioned over the back-end portion of the connector body and a second portion positioned over the jacket end portion. At least some of the aramid fibers extend between the first portion of the tube and the back-end portion of the connector body. The fiber optic connector also includes a boot molded over the back-end portion of the connector body and the jacket end portion such that the boot is also molded over the tube. The tube is configured to prevent material of the boot from entering space between the end of the cable jacket and the back-end portion of the connector body.

According to one aspect or embodiment, the first portion of the tube is not deformed. There is no crimping of the tube, for example.

According to another aspect or embodiment, there is no heat shrink tube over the jacket end portion of the cable jacket or the tube.

According to another aspect or embodiment, the first portion of the tube is cylindrical. The second portion of the tube may also be cylindrical in some embodiments. And furthermore, the first portion of the tube may be larger than the second portion of the tube. For example, the first portion of the tube have a first outer diameter, and the second portion of the tube may have a second outer diameter that is less than the first outer diameter.

According to another aspect or embodiment, the boot conforms to the tube such that the boot contacts at least 95% of an exterior of the tube.

According to another aspect or embodiment, at least some of the aramid fibers have respective end portions extending beyond the first portion of the tube and at least partially encapsulated by the material of the boot.

According to another aspect or embodiment the material of the boot comprises a polyamide thermoplastic material. The tube may comprise a different material, such as metal.

In some embodiments, the at least one optical fiber consists of a single optical fiber, the fiber optic connector further includes a ferrule that is biased relative to the connector body, and the single optical fiber is secured to ferrule. In other embodiments, the at least one optical fiber comprises first and second optical fibers, wherein: the fiber optic connector further comprises first and second connector sub-assemblies supported by the connector body; each of the first and second connector sub-assemblies includes a connector housing and a ferrule supported within the connector housing; the first optical fiber is secured to the ferrule of the first connector sub-assembly; and the second optical fiber is secured to the ferrule of the second connector sub-assembly.

Methods of forming a fiber optic cable assembly are also provided in this disclosure, wherein the fiber optic cable assembly is formed from a fiber optic cable that includes at least one optical fiber, a cable jacket surrounding the at least one optical fiber, and aramid fibers between the cable jacket and the at least one optical fiber. According to one embodiment, a method comprises: positioning a tube on the cable jacket; removing some of the cable jacket so that a length of the at least one optical fiber and at least some of the aramid fibers extend beyond an end of the cable jacket; positioning a connector body on the length of the at least one optical fiber, wherein the connector body includes a back-end portion through which the at least one optical fiber extends, and wherein the connector body is positioned on the length of the at least one optical fiber so that the back-end portion is spaced from the end of the cable jacket; moving the tube along the cable so that a first portion of the tube is positioned over the back-end portion of the connector body and a second portion of the tube is positioned over a jacket end portion that defines the end of the cable jacket, wherein the at least some of the aramid fibers extend between the first portion of the tube and the back-end portion of the connector body; and molding a boot over the back-end portion of the connector body and the jacket end portion of the cable jacket such that the boot is also molded over the tube. The tube prevents material of the boot from entering space between the end of the cable jacket and the back-end portion of the connector body.

According to a further aspect or embodiment, the method further comprises: placing the back-end portion of the connector body, the tube, and a portion of the fiber optic cable within a cavity of a mold; flowing the material of the boot into the cavity of the mold, wherein the material is kept at a temperature below 240°C and at a pressure less than 4000 kPa; solidifying the material to form the boot within the mold; and removing the portion of the fiber optic cable, the back-end portion of the connector body, and the boot from the mold.

Additional features and advantages will be set out in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### BRIEF DESCRIPTION OF THE DRAWINGS

The accompanying drawings illustrate one or more embodiment(s), and together with the description serve to explain principles and operation of the various embodiments. Features and attributes associated with any of the embodiments shown or described may be applied to other embodiments shown, described, or appreciated based on this disclosure.
FIG. 1 is a perspective view of an example of a simplex fiber optic connector including a ferrule configured to support a single optical fiber.
FIG. 2 is a perspective view of an example of a duplex fiber optic connector that includes two connectors according to FIG. 1 as sub-assemblies.
FIG. 3 a perspective view of an end of a fiber optic cable being prepared to form a fiber optic cable assembly according to this disclosure.
FIG. 4 is a perspective view similar to FIG. 3, but shows a connector body being positioned on the end of the fiber optic cable.
FIG. 5 is a perspective view similar to FIG. 4, but shows the tube moved along the cable to extend over a back-end portion of the connector body and an end of a cable jacket.
FIGS. 6A and 6B are top elevation views of respective first and second mold components used to form a boot over portions of
FIG. 7 is a perspective view of the first and second mold components assembled together, and with the back-end portion of the connector body within a cavity of the mold.
FIG. 8 is a side view of a portion of a fiber optic cable assembly according to this disclosure, wherein the fiber optic cable assembly includes a boot that has been molded over the back-end portion of the connector body and a jacket end portion of the cable jacket.
FIG. 9 is a cross-sectional view of the portion of the fiber optic cable assembly shown in FIG. 8.

### DETAILED DESCRIPTION

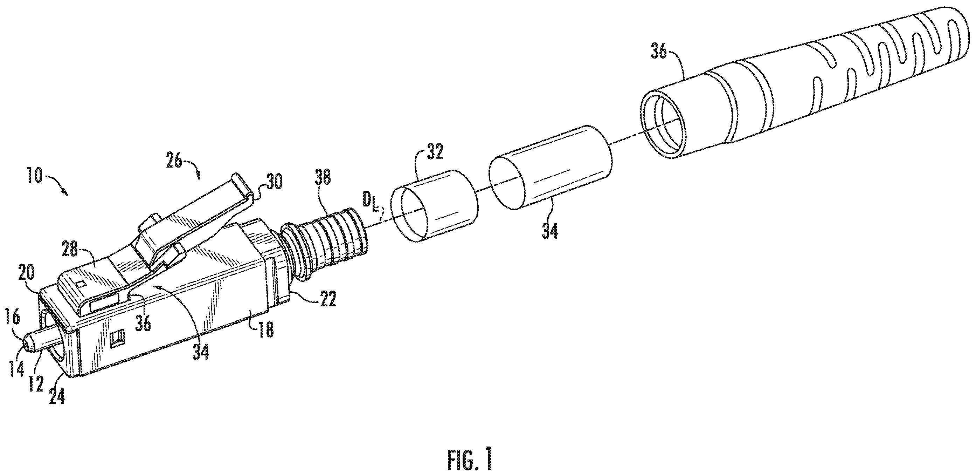

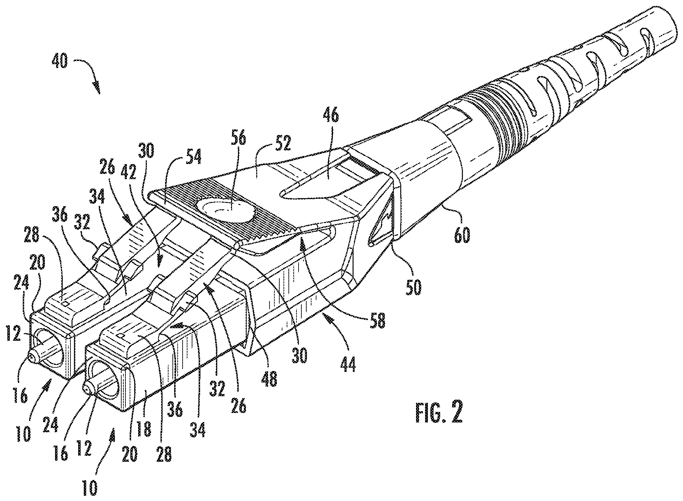

Various embodiments will be further clarified by examples in the description below. In general, the description relates to fiber optic cable assemblies having over-molded connector boots. In other words, the description relates to fiber optic cables assembled with fiber optic connectors (thereby forming fiber optic cable assemblies), with some of the connectors having a boot molded over a region where the cable joins to another component of the connector. The connector may otherwise have a conventional design, like the examples shown in FIGS. 1 and 2. FIG. 1 illustrates a fiber optic connector 10 ("connector 10") in the form of a simplex LC connector (e.g., according to IEC standard 61754-20:2012), and FIG. 2 illustrates a fiber optic connector ("connector 40") in the form of a duplex LC connector (e.g., also according to IEC 61754-20:2012). The connectors 10, 40 will first be described to provide context for the principles of this disclosure, which may be applied to these or other connector designs.

As shown in FIG. 1, the connector 10 includes a ferrule 12 configured to support an optical fiber (not shown) extending in a generally longitudinal direction D_{L} through a bore 14 of the ferrule 12. An intermediate portion of the ferrule 12 extends through a cap 24 coupled to a connector body 18 (also referred to as a "connector sub-assembly body 18," "connector housing 18," or simply "housing 18"). The ferrule 12 extends from a ferrule holder (not shown) that is retained within the connector body 18 by the cap 24. A spring (not shown) biases the ferrule holder forward within the connector body 18 so that a front end 16 of the ferrule 12 projects forward beyond a front end 20 of the connector body 18. The front end 16 of the ferrule 12 presents the optical fiber extending through the bore 14 for optical coupling with a mating component (e.g., another fiber optic connector).

The connector 10 further includes a latch arm 26 extending outwardly and rearwardly from (e.g., in a slanted direction relative to) a portion of the connector body 18. In this regard, the latch arm 26 has a proximal end 28 coupled to the connector body 18 and a distal end 30 spaced from the connector body 18, with the connector body 18 and the latch arm 26 being separated from one another and defining a space therebetween. An intermediate portion of the latch arm 26 includes cantilever latch tabs, which protrude laterally from the latch arm 26. The distal end 30 of the latch arm 26 may be depressed toward the connector body 18 to disengage the connector 10 from another structure, such as an adapter or a dust cap (neither shown in FIG. 1).

Normally a crimp ring or band 32, a heat shrink tube 34, and elastomeric boot 36 are provided with the connector 10; they are installed at the time of installing other components of the connector 10 onto a cable (not shown in FIG. 1). The crimp ring 32 is typically a metal component that is crimped (i.e., deformed) onto a back-end portion 38 of the connector body 18 to secure the cable to the connector 10. Specifically, cables may include strength elements in the form of aramid yarns or fibers, and these aramid fibers may be extended over the rear portion 38 of the connector body 18. Placing the crimp ring 32 over this cable-connector interface and performing the crimping secures the aramid fibers to the connector body 18. The heat shrink tube 34 is then used to cover the interface between the crimp ring 32 and the portion of the cable from which the aramid fibers extend. Finally, the boot 36 is used to cover portions of both the connector 10 and cable to help limit bending at the cable-connector interface.

FIG. 2 is a perspective view of the duplex connector 40, which includes as sub-assemblies two of the simplex connectors 10 according to FIG. 1. For convenience, the term "connector sub-assemblies" (or "connector elements") will be used to refer to the connectors 10 when discussing these elements in connection with the connector 40. Indeed, in alternative embodiments, duplex connectors may include connector elements that are not similar to simplex fiber optic connectors in all respects.

Still referring to FIG. 2, proximal portions of the connector sub-assemblies 10 in the connector 40 are separated by a lateral gap 42. Rear portions of each connector sub-assembly 10 are received within a shell 44 that surrounds a common connector body or internal housing 46 that supports each connector sub-assembly 10. The shell 44 includes a front end 48 defining a generally rectangular opening that receives rear portions of the connector sub-assemblies 10. The shell 44 also includes a rear end 50 having a narrowed width in comparison to the front end 48. An outer boot 60 is arranged proximate to the rear end 50 of the shell 44, and may be fitted over a portion of the connector body 46. A trigger 52 extends outwardly and forwardly (e.g., in a slanted direction relative to) the shell 44 above a recess 58, with a front end 54 of the trigger 52 extending over distal ends 30 of the latch arms 26 of the connector sub-assemblies 10. In operation, a user may press the trigger 52 (e.g., at a finger receiving area 56) in a direction toward the shell 44 to cause the distal ends 30 of the latch arms 26 to move toward the respective connector bodies 18, thereby operating the latch arms 26 to permit disengagement of the connector sub-assemblies 10 from another structure, such as an adapter or a dust cap (neither shown in FIG. 2).

Having described the connector 10 shown in FIG. 1 and the connector 40 shown in FIG. 2 for comparison purposes, fiber optic assemblies having over-molded connector boots will now be described. The fiber optic cable assemblies include a fiber optic connector with a connector body, such as the connector body 18 (e.g., when the fiber optic connector is a simplex connector) or the common connector body 46 (e.g., when the fiber optic connector is a duplex connector), but a different boot design than what is shown in FIGS. 1 and 2. For convenience, an example will be described using the connector body 46 and the new boot design. The example can be best understood from a description of how the cable assembly is formed.

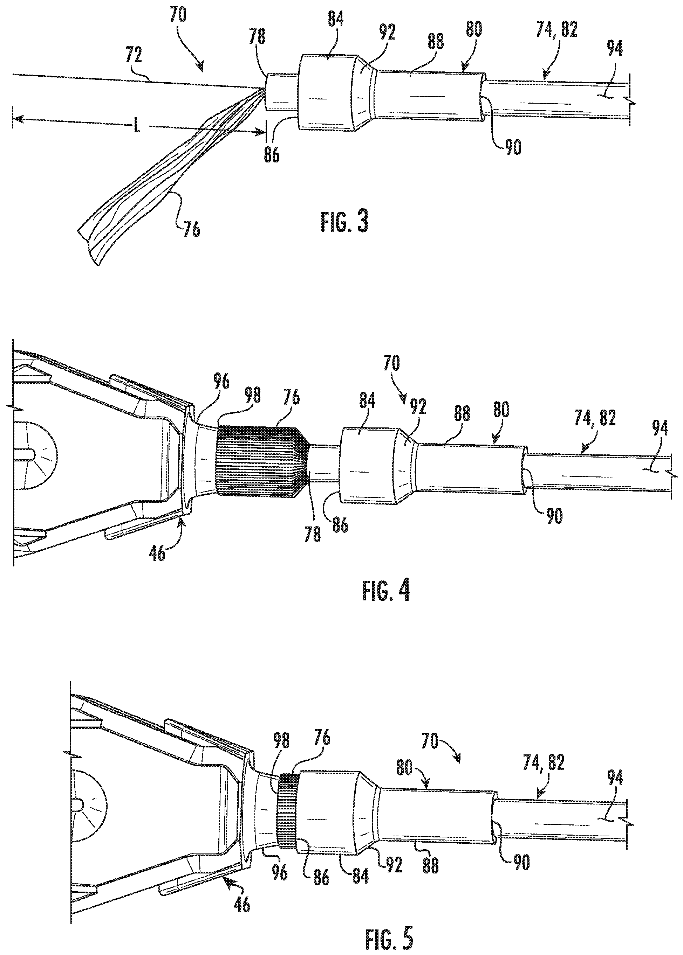

Starting with FIG. 3, a fiber optic cable ("cable 70") includes one or more optical fibers (represented by line 72), a cable jacket ("jacket 74") surrounding the optical fiber(s) 72, and aramid fibers 76 (i.e., yarns) between the jacket 74 and the optical fiber(s) 72. FIG. 3 illustrates one end of the cable 70 after removing a portion of the jacket 74 to expose a length L of the optical fiber(s) 72 and aramid fibers 76. In other words, the jacket 74 may have an initial end (not shown) covering the length L, but then be cut or otherwise removed to expose the previously-covered length L of the optical fiber(s) 72 and aramid fibers 76. This results in the jacket 74 having a new end 78 ("end 78"), which is what is shown in FIG. 3.

FIG. 3 also illustrates a tube 80 positioned on an end portion 82 ("jacket end portion 82") of the jacket 74 that defines the end 78. The tube 80 may be placed on the cable 70 before or after cutting the jacket 74 to expose the optical fiber(s) 72 and aramid fibers 76. In the embodiment shown, the tube 80 includes a cylindrical first portion 84 that defines a front end 86 of the tube 80, a smaller cylindrical second portion 88 that defines a back end 90 of the tube 80, and a transition region 92 between the first and second portions 84, 88. The first portion 84 has an inner diameter larger than an outer diameter of the jacket 74 such that a gap exists between an inner surface of the tube 80 in the first portion 84 and an outer surface 94 of the jacket 74. The second portion 88 has an inner diameter that is slightly smaller than or approximately equal to the outer diameter of the jacket 74. For example, there may be a slight interference between the second portion 88 of the tube 80 and the jacket 74, with the inner surface of the tube 80 in the second portion 88 contacting the outer surface 94 of the jacket 74. If there is slight interference, the forces are such that the tube 80 can still be easily moved (e.g., slid) along the jacket 74. The tube 80 may be constructed from metal or another suitable material.

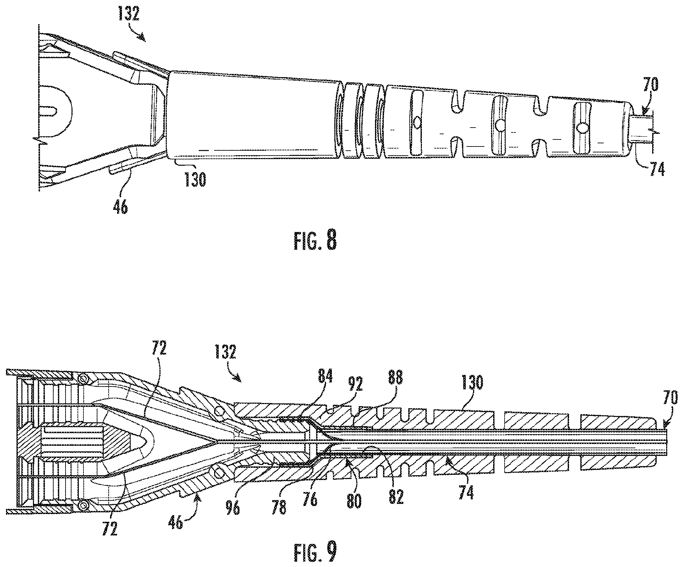

FIG. 4 illustrates the connector body 46 positioned on the end of the cable 70. To do so, the connector body 46 is moved over the optical fiber(s) 72 (not shown in FIG. 4) such that the optical fiber(s) 72 extend through at least a back-end portion 96 (FIG. 9) of the connector body 46. The aramid fibers 76 have been cut to a shorter length compared to FIG. 3 and positioned over the back-end portion 96 of the connector body 46. The back-end portion 96 remains spaced from the end 78 of the jacket 74 so that the aramid fibers 76 can extend out of the jacket 74 and over the back-end portion 96.

As shown in FIG. 5, the tube 80 may then be moved along the cable 70 until the first portion 84 is positioned over the back-end portion 96 of the connector body 46. This results in portions of the aramid fibers 76 extending between the first portion 84 of the tube 80 and the back-end portion 96 of the connector body 46. Although the aramid fibers 76 are accommodated in such a manner, space between the first portion 84 of the tube 80 and the back-end portion 96 of the connector body 46 is minimal. For example, the first portion 84 of the tube 80 may have an inner diameter that is within 10% of an outer diameter of the back-end portion 96. Respective ends 98 of the aramid fibers 76 may remain outside of the tube 80 (i.e., uncovered).

Still referring to FIG. 5, the second end portion 88 of the tube 80 does not move off the jacket end portion 82. That is, at least some of the second portion 88 remains positioned over the jacket end portion 82. Thus, the tube 80 covers the space between the back-end portion 96 of the connector body 46 and the end 78 of the jacket 74.

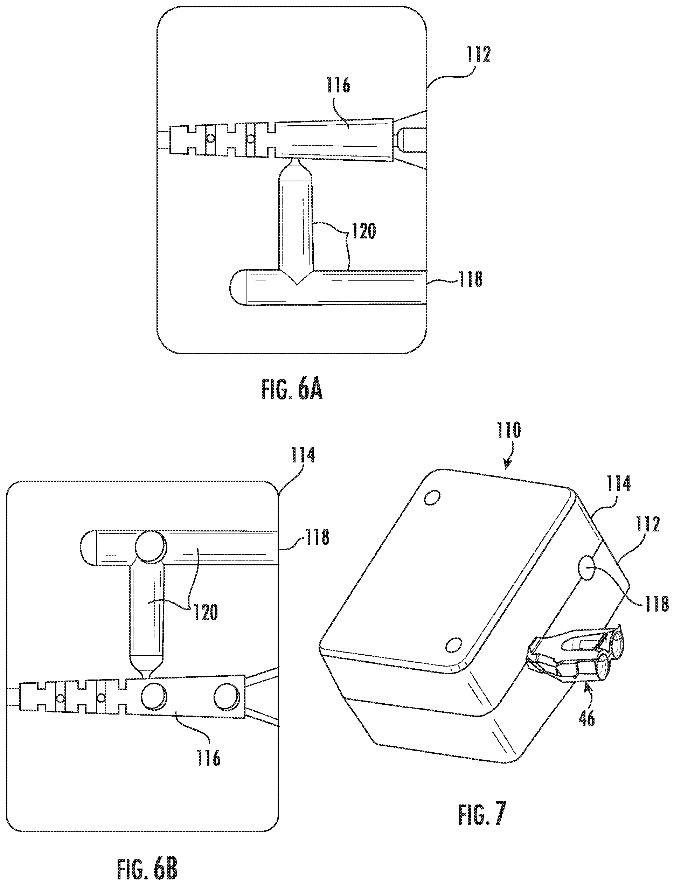

FIGS. 6A and 6B illustrate examples of respective first and second mold components 112, 114, and FIG. 7 illustrates the first and second mold components 112, 114 assembled together to define a mold 110. The cable 70 with the connector 40 partially assembled in the manner described above may be placed into a cavity 116 of the mold 110. As can be appreciated from FIG. 7, the back-end portion 96 of the connector body 46 may be received in the cavity 116, and a remainder of the connector body 46 may remain outside the cavity 116 on one side of the mold 110. The cable 70 (not shown in FIG. 7) extends out of the cavity 116 on an opposite side of the mold 110. Thus, the back-end portion 96 of the connector body 46, the jacket end portion 82, and the tube 80 that is positioned over the back-end portion 88 and jacket end portion 82 are positioned in the cavity 116. Molding material may be introduced into the cavity 116 through an injection port 118 and injection channels 120 defined by the first and second mold components 112, 114. Additional details relating to the molding material and process will be described in further detail below.

Although the molding material may be flowable when being introduced into the cavity 116, the tube 80 prevents the molding material from entering into the connector body 46 and jacket 74. For example, this may be due to the close-fitting arrangement between: a) the first portion 84 of the tube 80 and the back-end portion 96 of the connector body 46, and b) the second portion 88 of the tube 80 and the jacket end portion 82. The ends 98 of the aramid fibers 76 that remained exposed (see FIG. 5) may be at least partially encapsulated by the molding material.

Ultimately the molding material fully occupies the cavity 116 and is brought into a non-flowable state, such as by allowing to cool or by actively cooling. As shown in FIGS. 9 and 10, which illustrate the cable 70 removed from the mold, this results in the molding material forming a boot 130 that has the shape of the cavity 116. The cable 70 together with the connector 40 (including the boot 130) form a cable assembly 132. The boot 130 conforms to the shape of the components it covers. Material of the boot 130, for example, may be in contact with substantially all (e.g., at least 95%) of an exterior of the tube 80 and adjacent portions of the connector body 18 and jacket 74. Thus, unlike the boots 36, 60 (FIG. 1), the cable assembly 132 does not include a heat shrink tube (e.g., the heat shrink tube 34 in FIG. 1) over the cable-connector interface. The material costs and processing steps associated with applying such heat shrink tubes (e.g., using ovens or other devices to apply heat) can be avoided.

The same can be said with respect to the crimp ring 32 (FIG. 1). That is, the cable assembly 132 avoids the need to perform a crimping step; there is no need to deform the tube 80 or any other component onto the back-end portion 96 of the connector body 46 to secure the aramid fibers 76 to the connector 40. Avoiding this step in forming the cable assembly 132 may not only save time and cost (e.g., by not needing a crimping tool), but may also avoid potential damage to the connector body 46.

As can be appreciated, although the molding step may be needed to form the cable assembly 132, multiple steps that are traditionally required can be avoided. Manufacturing process flows can be streamlined, and the total amount of equipment needed for forming the cable assembly can be reduced.

Advantageously, the molding may be performed using thermoplastic materials having properties suitable for low pressure molding (LPM). This type of molding may be characterized by relatively low pressures and temperatures. For example, the material of the boot 130 may be kept at a temperature below 240 °C and at a pressure less than 4000 kPa during the molding process. Molding may be performed relatively fast, with the boot 130 being formed in less than 60 seconds, or even in less than 30 seconds in some embodiments.

Examples of thermoplastic materials that may be suitable for low pressure molding include polyamide-based materials, such as TECHNOMELT^{®} PA 6208, 6790, 633, 641, 652, or 673 (Henkel Corp., Dusseldorf, Germany). These materials have viscosities in the range of about 3000 mPa:s to about 7000 mPa:s at 210 °C, glass transition temperatures of no greater than -35 °C, and service temperatures that range from no less than about -40°C to no greater than about 140 °C. A glass transition temperature is the point at which a material goes from a hard brittle state to a flexible or soft rubbery state as temperature is increased. A common method for determining glass transition temperature uses the energy release on heating in differential scanning calorimetry. In certain embodiments, service temperature of a thermoplastic material may be determined by compliance with one or more industry standards for telecommunication fiber reliability testing, such as (but not limited to): ITU-T G.652, IEC 60793-2, Telcordia GR-20-CORE, and TIA/EIA-492.

Those skilled in the art will appreciate that modifications and variations can be made without departing from the scope of the appended claims. For example, although LC connectors are described above and shown in the drawings, the same principles may be applied to other connector designs, such as SC connectors (e.g., according to IEC 61754-4:2013) and MPO connectors (e.g., according to IEC 61754-7:2014). Similarly, the mold 110 should be seen merely as an example, as noted above. Different mold designs may be used to form the boot 130 by applying the principles of this disclosure. This includes embodiments of molds having multiple cavities (e.g., 12 or more) for forming multiple boots simultaneously, thereby increasing manufacturing capacity / overall throughput.

## Claims

1. A fiber optic cable assembly, comprising:
a fiber optic cable (70) having at least one optical fiber (72), a cable jacket (74) surrounding the at least one optical fiber (72), and aramid fibers (76) between the cable jacket (74) and the at least one optical fiber (72); and
a fiber optic connector (40) installed on an end of the fiber optic cable (70), the fiber optic connector (40) including:
a connector body (46) having a back-end portion (96), wherein the at least one optical fiber (72) extends through the back-end portion (96) of the connector body (46);
the cable jacket (74) includes a jacket end portion (82) defining an end of the cable jacket (74) that is spaced from the back-end portion (96) of the connector body (46); and
at least some of the aramid fibers (76) extend beyond the end of the cable jacket (74) and over the back-end portion (96) of the connector body (46);
a tube (80) having a first portion (84) positioned over the back-end portion (96) of the connector body (46) and a second portion (88) positioned over the jacket end portion (82) of the cable jacket (74), wherein the at least some of the aramid fibers (76) extend between the first portion of the tube (80) and the back-end portion (96) of the connector body (46); and
a boot (130) molded over the back-end portion (96) of the connector body (46) and the jacket end portion (82) of the cable jacket (74) such that the boot (130) is also molded over the tube (80), wherein the tube (80) is configured to prevent material of the boot (130) from entering into space between the end of the cable jacket (74) and the back-end portion (96) of the connector body (46).

2. The fiber optic cable assembly of claim 1, wherein the first portion (84) of the tube (80) is not crimped onto the back-end portion (96) of the connector body (46).

3. The fiber optic cable assembly of claim 2, wherein the first portion (84) of the tube (80) is cylindrical.

4. The fiber optic cable assembly of claim 3, wherein the second portion (88) of the tube (80) is cylindrical.

5. The fiber optic cable assembly of claim 4, wherein the first portion (84) of the tube (80) has a first inner diameter and the second portion (88) of the tube (80) has a second inner diameter that is less than the first outer diameter.

6. The fiber optic cable assembly of claim 5, wherein the boot (130) conforms to the tube (80) such that the boot (130) contacts at least 95% of an exterior of the tube (80).

7. The fiber optic cable assembly of any of claims 1-6, wherein the at least some of the aramid fibers (76) have respective end portions extending beyond the first portion (84) of the tube (80) and at least partially encapsulated by the material of the boot (130) .

8. The fiber optic cable assembly of any of claims 1-7, wherein the boot (130) comprises a polyamide thermoplastic material.

9. The fiber optic cable assembly of claim 8, wherein the tube (80) comprises metal.

10. The fiber optic cable assembly of any of claims 1-9, wherein there is no heat shrink tube over the end portion of the cable jacket (74).

11. The fiber optic cable assembly of any of claims 1-10, wherein the at least one optical fiber (72) consists of a single optical fiber, the fiber optic connector further includes a ferrule (12) that is biased relative to the connector body (46), and the single optical fiber (72) is secured to the ferrule (12).

12. The fiber optic cable assembly of any of claims 1-10, wherein:
the at least one optical fiber (72) comprises first and second optical fibers;
the fiber optic connector further comprises first and second connector sub-assemblies supported by the connector body;
each of the first and second connector sub-assemblies includes a connector housing and a ferrule supported within the connector housing;
the first optical fiber is secured to the ferrule of the first connector sub-assembly; and
the second optical fiber is secured to the ferrule of the second connector sub-assembly.

13. A method of forming a fiber optic cable assembly from a fiber optic cable (70) that includes at least one optical fiber (72), a cable jacket (74) surrounding the at least one optical fiber (72), and aramid fibers (76) between the cable jacket (74) and the at least one optical fiber, the method comprising:
positioning a tube (80) on the cable jacket (74);
removing some of the cable jacket (74) so that a length of the at least one optical fiber (72) and at least some of the aramid fibers (76) extend beyond an end of the cable jacket (74);
positioning a connector body (46) on the length of the at least one optical fiber (72), wherein the connector body (46) includes a back-end portion (96) through which the at least one optical fiber extends, and wherein the connector body (46) is positioned on the length of the at least one optical fiber so that the back-end portion (96) is spaced from the end of the cable jacket (74);
moving the tube (80) along the fiber optic cable (70) so that a first portion (84) of the tube (80) is positioned over the back-end portion (96) of the connector body (46) and a second portion (86) of the tube (80) is positioned over a jacket end portion (82) that defines the end of the cable jacket, wherein the at least some of the aramid fibers (96) extend between the first portion of the tube and the back-end portion of the connector body (46); and
molding a boot (130) over the back-end portion of the connector body (46) and the jacket end portion (82) of the cable jacket (74) such that the boot (130) is also molded over the tube (80), wherein the tube (80) prevents material of the boot (130) from entering space between the end of the cable jacket (74) and the back-end portion (96) of the connector body.

14. The method of claim 13, wherein the at least some of the aramid fibers (76) have respective end portions extending beyond the first portion (84) of the tube (80) after the first portion (84) of the tube (80) is positioned over the back-end portion (96) of the connector body (46), and wherein the molding of the boot (130) further comprises at least partially encapsulating the end portions of the at least some of the aramid fibers with the material of the boot (130).

15. The method of either claim 13 or 14, wherein the molding of the boot further comprises:
placing the back-end portion (96) of the connector body (46), the tube, and a portion of the fiber optic cable within a cavity of a mold;
flowing the material of the boot into the cavity of the mold, wherein the material is kept at a temperature below 240 °C and at a pressure less than 4000 kPa;
solidifying the material to form the boot within the mold; and
removing the portion of the fiber optic cable, the back-end portion of the connector body, and the boot from the mold.

## Patentansprüche

1. Glasfaserkabelanordnung, die Folgendes umfasst:
ein Glasfaserkabel (70) mit mindestens einer Glasfaser (72), einem die mindestens eine Glasfaser (72) umgebenden Kabelmantel (74) und Aramidfasern (76) zwischen dem Kabelmantel (74) und der mindestens einen Glasfaser (72); und
einen an einem Ende des Glasfaserkabels (70) installierten Glasfaserverbinder (40), wobei der Glasfaserverbinder (40) Folgendes beinhaltet:
einen Verbinderkörper (46) mit einem hinteren Endabschnitt (96), wobei sich die mindestens eine Glasfaser (72) durch den hinteren Endabschnitt (96) des Verbinderkörpers (46) erstreckt;
wobei der Kabelmantel (74) einen Mantelendabschnitt (82) aufweist, der ein Ende des Kabelmantels (74) definiert, das vom hinteren Endabschnitt (96) des Verbinderkörpers (46) beabstandet ist; und
wobei sich mindestens einige der Aramidfasern (76) über das Ende des Kabelmantels (74) hinaus und über den hinteren Endabschnitt (96) des Verbinderkörpers (46) erstrecken;
ein Rohr (80) mit einem ersten Abschnitt (84), der über dem hinteren Endabschnitt (96) des Verbinderkörpers (46) positioniert ist, und einem zweiten Abschnitt (88), der über dem Mantelendabschnitt (82) des Kabelmantels (74) positioniert ist, wobei sich zumindest einige der Aramidfasern (76) zwischen dem ersten Abschnitt des Rohrs (80) und dem hinteren Endabschnitt (96) des Verbinderkörpers (46) erstrecken; und
eine Manschette (130), die über den hinteren Endabschnitt (96) des Verbinderkörpers (46) und den Mantelendabschnitt (82) des Kabelmantels (74) geformt ist, so dass die Manschette (130) auch über das Rohr (80) geformt ist, wobei das Rohr (80) so konfiguriert ist, dass es verhindert, dass Material der Manschette (130) in den Raum zwischen dem Ende des Kabelmantels (74) und dem hinteren Endabschnitt (96) des Verbinderkörpers (46) eintritt.

2. Glasfaserkabelanordnung nach Anspruch 1, wobei der erste Abschnitt (84) des Rohrs (80) nicht auf den hinteren Endabschnitt (96) des Verbinderkörpers (46) gecrimpt ist.

3. Glasfaserkabelanordnung nach Anspruch 2, wobei der erste Abschnitt (84) des Rohrs (80) zylindrisch ist.

4. Glasfaserkabelanordnung nach Anspruch 3, wobei der zweite Abschnitt (88) des Rohrs (80) zylindrisch ist.

5. Glasfaserkabelanordnung nach Anspruch 4, wobei der erste Abschnitt (84) des Rohrs (80) einen ersten Innendurchmesser hat und der zweite Abschnitt (88) des Rohrs (80) einen zweiten Innendurchmesser hat, der kleiner als der erste Außendurchmesser ist.

6. Glasfaserkabelanordnung nach Anspruch 5, wobei die Manschette (130) so der Form des Rohrs (80) entspricht, dass die Manschette (130) mit mindestens 95 % der Außenseite des Rohrs (80) in Kontakt ist.

7. Glasfaserkabelanordnung nach einem der Ansprüche 1-6, wobei die mindestens einigen der Aramidfasern (76) jeweilige Endabschnitte aufweisen, die sich über den ersten Abschnitt (84) des Rohrs (80) hinaus erstrecken und zumindest teilweise durch das Material der Manschette (130) eingekapselt sind.

8. Glasfaserkabelanordnung nach einem der Ansprüche 1-7, wobei die Manschette (130) ein thermoplastisches Polyamidmaterial umfasst.

9. Glasfaserkabelanordnung nach Anspruch 8, wobei das Rohr (80) Metall umfasst.

10. Glasfaserkabelanordnung nach einem der Ansprüche 1-9, wobei sich über dem Endabschnitt des Kabelmantels (74) kein Wärmeschrumpfschlauch befindet.

11. Glasfaserkabelanordnung nach einem der Ansprüche 1-10, wobei die mindestens eine Glasfaser (72) aus einer einzelnen Glasfaser besteht, der Glasfaserverbinder ferner eine Adernendhülse (12) umfasst, die relativ zum Verbinderkörper (46) vorgespannt ist, und die einzelne Glasfaser (72) an der Adernendhülse (12) befestigt ist.

12. Glasfaserkabelanordnung nach einem der Ansprüche 1-10, wobei:
die mindestens eine Glasfaser (72) eine erste und eine zweite Glasfaser umfasst;
der Glasfaserverbinder ferner eine erste und eine zweite vom Verbinderkörper getragene Verbindersubbaugruppe umfasst;
die erste und zweite Verbindersubbaugruppe jeweils ein Verbindergehäuse und eine in dem Verbindergehäuse getragene Adernendhülse umfassen;
die erste Glasfaser an der Adernendhülse der ersten Verbindersubbaugruppe befestigt ist; und
die zweite Glasfaser an der Adernendhülse der zweiten Verbindersubbaugruppe befestigt ist.

13. Verfahren zum Bilden einer Glasfaserkabelanordnung aus einem Glasfaserkabel (70), das mindestens eine Glasfaser (72), einen die mindestens eine Glasfaser (72) umgebenden Kabelmantel (74) und Aramidfasern (76) zwischen dem Kabelmantel (74) und der mindestens einen Glasfaser umfasst, wobei das Verfahren Folgendes beinhaltet:
Positionieren eines Rohrs (80) auf dem Kabelmantel (74);
Entfernen eines Teils des Kabelmantels (74), so dass sich ein Stück der mindestens einen Glasfaser (72) und mindestens einige der Aramidfasern (76) über ein Ende des Kabelmantels (74) hinaus erstrecken;
Positionieren eines Verbinderkörpers (46) auf dem Stück der mindestens einen Glasfaser (72), wobei der Verbinderkörper (46) einen hinteren Endabschnitt (96) aufweist, durch den sich die mindestens eine Glasfaser erstreckt, und wobei der Verbinderkörper (46) auf dem Stück der mindestens einen Glasfaser so positioniert ist, dass der hintere Endabschnitt (96) vom Ende des Kabelmantels (74) beabstandet ist;
Bewegen des Rohrs (80) entlang des Glasfaserkabels (70), so dass ein erster Abschnitt (84) des Rohrs (80) über dem hinteren Endabschnitt (96) des Verbinderkörpers (46) positioniert wird und ein zweiter Abschnitt (86) des Rohrs (80) über einem Mantelendabschnitt (82) positioniert wird, der das Ende des Kabelmantels definiert, wobei sich die mindestens einigen der Aramidfasern (96) zwischen dem ersten Abschnitt des Rohrs und dem hinteren Endabschnitt des Verbinderkörpers (46) erstrecken; und
Formen einer Manschette (130) über dem hinteren Endabschnitt des Verbinderkörpers (46) und dem Mantelendabschnitt (82) des Kabelmantels (74), so dass die Manschette (130) auch über dem Rohr (80) geformt wird, wobei das Rohr (80) verhindert, dass Material der Manschette (130) in den Raum zwischen dem Ende des Kabelmantels (74) und dem hinteren Endabschnitt (96) des Verbinderkörpers gelangt.

14. Verfahren nach Anspruch 13, wobei mindestens einige der Aramidfasern (76) jeweilige Endabschnitte aufweisen, die sich nach dem Positionieren des ersten Abschnitts (84) des Rohrs (80) über dem hinteren Endabschnitt (96) des Verbinderkörpers (46) über den ersten Abschnitt (84) des Rohrs (80) hinaus erstrecken, und wobei das Formen der Manschette (130) ferner das zumindest teilweise Einkapseln der Endabschnitte der zumindest einigen der Aramidfasern mit dem Material der Manschette (130) beinhaltet.

15. Verfahren nach Anspruch 13 oder 14, wobei das Formen der Manschette ferner Folgendes beinhaltet:
Platzieren des hinteren Endabschnitts (96) des Verbinderkörpers (46), des Rohrs und eines Abschnitts des Glasfaserkabels in einem Hohlraum einer Form;
Fließenlassen des Materials der Manschette in den Hohlraum der Form, wobei das Material auf einer Temperatur unter 240 °C und bei einem Druck von weniger als 4000 kPa gehalten wird;
Erstarrenlassen des Materials, um die Manschette in der Form zu bilden; und
Entfernen des Abschnitts des Glasfaserkabels, des hinteren Endabschnitts des Verbindungskörpers und der Manschette aus der Form.

## Revendications

1. Ensemble de câble à fibres optiques, comprenant :
un câble à fibres optiques (70) comportant au moins une fibre optique (72), une gaine de câble (74) entourant l'au moins une fibre optique (72) et des fibres d'aramide (76) entre la gaine de câble (74) et l'au moins une fibre optique (72) ; et
un connecteur de fibre optique (40) installé sur une extrémité du câble à fibres optiques (70), le connecteur de fibre optique (40) comprenant :
un corps de connecteur (46) présentant une partie dorsale (96), dans lequel l'au moins une fibre optique (72) s'étend à travers la partie dorsale (96) du corps de connecteur (46) ;
la gaine de câble (74) comporte une partie d'extrémité de gaine (82) définissant une extrémité de la gaine de câble (74) qui est espacée de la partie dorsale (96) du corps de connecteur (46) ; et
au moins certaines des fibres d'aramide (76) s'étendent au-delà de l'extrémité de la gaine du câble (74) et par-dessus la partie dorsale (96) du corps de connecteur (46) ;
un tube (80) présentant une première partie (84) positionnée par-dessus la partie dorsale (96) du corps de connecteur (46) et une seconde partie (88) positionnée par-dessus la partie d'extrémité de gaine (82) de la gaine de câble (74), dans lequel les au certaines des fibres d'aramide (76) s'étendent entre la première partie du tube (80) et la partie dorsale (96) du corps de connecteur (46) ; et
un soufflet (130) moulé par-dessus la partie dorsale (96) du corps de connecteur (46) et la partie d'extrémité de gaine (82) de la gaine de câble (74) de telle sorte que le soufflet (130) soit également moulé par-dessus le tube (80), dans lequel le tube (80) est configuré pour empêcher le matériau du soufflet (130) de pénétrer dans l'espace entre l'extrémité de la gaine de câble (74) et la partie dorsale (96) du corps de connecteur (46).

2. Ensemble de câble à fibres optiques selon la revendication 1, dans lequel la première partie (84) du tube (80) n'est pas sertie sur la partie dorsale (96) du corps de connecteur (46).

3. Ensemble de câble à fibres optiques selon la revendication 2, dans lequel la première partie (84) du tube (80) est cylindrique.

4. Ensemble de câble à fibres optiques selon la revendication 3, dans lequel la seconde partie (88) du tube (80) est cylindrique.

5. Ensemble de câble à fibres optiques selon la revendication 4, dans lequel la première partie (84) du tube (80) a un premier diamètre intérieur et la seconde partie (88) du tube (80) a un second diamètre intérieur inférieur au premier diamètre extérieur.

6. Ensemble de câble à fibres optiques selon la revendication 5, dans lequel le soufflet (130) épouse la forme du tube (80) de telle sorte que le soufflet (130) entre en contact avec au moins 95 % d'un extérieur du tube (80).

7. Ensemble de câble à fibres optiques selon l'une quelconque des revendications 1 à 6, dans lequel les au moins certaines des fibres d'aramide (76) présentent des parties d'extrémité respectives s'étendant au-delà de la première partie (84) du tube (80) et au moins partiellement encapsulées par le matériau du soufflet (130) .

8. Ensemble de câble à fibres optiques selon l'une quelconque des revendications 1 à 7, dans lequel le soufflet (130) comprend un matériau thermoplastique polyamide.

9. Ensemble de câble à fibres optiques selon la revendication 8, dans lequel le tube (80) comprend un métal.

10. Ensemble de câble à fibres optiques selon l'une quelconque des revendications 1 à 9, dans lequel il n'y a pas de tube thermorétractable sur la partie d'extrémité de la gaine de câble (74).

11. Ensemble de câble à fibre optique selon l'une quelconque des revendications 1 à 10, dans lequel l'au moins une fibre optique est constituée (72) d'une seule fibre optique, le connecteur de fibre optique comporte en outre une ferrule (12) qui est sollicitée par rapport au corps de connecteur (46), et la fibre optique unique (72) est fixée à la ferrule (12).

12. Ensemble de câble à fibres optiques selon l'une quelconque des revendications 1 à 10, dans lequel :
l'au moins une fibre optique (72) comprend des première et seconde fibres optiques ;
le connecteur de fibre optique comprend en outre des premier et second sous-ensembles de connecteur supportés par le corps de connecteur ;
chacun des premier et second sous-ensembles de connecteur comporte un boîtier de connecteur et une ferrule supportée à l'intérieur du boîtier de connecteur ;
la première fibre optique est fixée à la ferrule du premier sous-ensemble de connecteur ; et
la seconde fibre optique est fixée à la ferrule du second sous-ensemble de connecteur.

13. Procédé de formation d'un ensemble de câble à fibres optiques à partir d'un câble à fibres optiques (70) comportant au moins une fibre optique (72), une gaine de câble (74) entourant l'au moins une fibre optique (72) et des fibres d'aramide (76) entre la gaine de câble (74) et l'au moins une fibre optique, le procédé comprenant :
le positionnement d'un tube (80) sur la gaine de câble (74) ;
le retrait d'une partie de la gaine de câble (74) de telle sorte qu'une longueur de l'au moins une fibre optique (72) et au moins certaines des fibres d'aramide (76) s'étendent au-delà d'une extrémité de la gaine de câble (74) ;
le positionnement d'un corps de connecteur (46) sur la longueur de l'au moins une fibre optique (72), dans lequel le corps de connecteur (46) comporte une partie dorsale (96) à travers laquelle s'étend l'au moins une fibre optique, et dans lequel le corps de connecteur (46) est positionné sur la longueur de l'au moins une fibre optique de telle sorte que la partie dorsale (96) soit espacée de l'extrémité de la gaine de câble (74) ;
le déplacement du tube (80) le long du câble à fibres optiques (70) de telle sorte qu'une première partie (84) du tube (80) soit positionnée par-dessus la partie dorsale (96) du corps de connecteur (46) et qu'une seconde partie (86) du tube (80) soit positionnée par-dessus une partie d'extrémité de gaine (82) qui définit l'extrémité de la gaine de câble, dans lequel les au moins certaines des fibres d'aramide (96) s'étendent entre la première partie du tube et la partie dorsale du corps de connecteur (46) ; et
le moulage d'un soufflet (130) par-dessus la partie dorsale du corps de connecteur (46) et la partie d'extrémité de gaine (82) de la gaine de câble (74) de telle sorte que le soufflet (130) soit également moulé par-dessus le tube (80), dans lequel le tube (80) empêche le matériau du soufflet (130) de pénétrer dans l'espace entre l'extrémité de la gaine de câble (74) et la partie dorsale (96) du corps de connecteur.

14. Procédé selon la revendication 13, dans lequel les au moins certaines des fibres d'aramide (76) présentent des parties d'extrémité respectives s'étendant au-delà de la première partie (84) du tube (80) après que la première partie (84) du tube (80) est positionnée par-dessus la partie dorsale (96) du corps de connecteur (46), et dans lequel le moulage du soufflet (130) comprend en outre l'encapsulation au moins partiellement des parties d'extrémité des au moins certaines des fibres d'aramide avec le matériau du soufflet (130).

15. Procédé selon la revendication 13 ou 14, dans lequel le moulage du soufflet comprend en outre :
le placement de la partie dorsale (96) du corps de connecteur (46), du tube et d'une partie du câble à fibres optiques dans une cavité d'un moule ;
la coulée du matériau du soufflet dans la cavité du moule, dans lequel le matériau est maintenu à une température inférieure à 240 °C et à une pression inférieure à 4000 kPa ;
la solidification du matériau pour former le soufflet à l'intérieur du moule ; et
le retrait de la partie du câble à fibres optiques, de la partie dorsale du corps de connecteur et du soufflet du moule.
